# EUROPEAN PATENT SPECIFICATION

(11) **EP 2 615 801 B1**
(45) Date of publication and mention of the grant of the patent: **15.08.2018**
(21) Application number: 12151040.8
(22) Date of filing: 13.01.2012
(51) Int. Cl.: H04W 4/00, H04L 29/08, H04L 29/06, H04W 4/02

(54) **Identification of sensors in sensor networks to participate in measurement campaigns**
Identifikation von Sensoren in Sensornetzen zur Teilnahme an Messungs-Kampagnen
Identification de capteurs dans des réseaux de capteurs pour participer à des campagnes de mesure

(43) Date of publication of application: 17.07.2013
(73) Proprietor: AGT International GmbH, 8050 Zurich (CH)
(72) Inventor: Boufidis, Zacharias, 64287 Darmstadt (DE); Strohbach, Martin, 69493 Hirschberg (DE)
(74) Representative: Taor, Simon Edward William

(56) References cited:
- REDDY S ET AL: "MobiSense - mobile network services for coordinated participatory sensing", AUTONOMOUS DECENTRALIZED SYSTEMS, 2009. ISADS '09. INTERNATIONAL SYMPOSIUM ON, IEEE, PISCATAWAY, NJ, USA, 23 March 2009 (2009-03-23), pages 1-6, XP031514896, ISBN: 978-1-4244-4327-7
- SHASHA LIU ET AL: "Volunteer Sensing: The New Paradigm of Social Sensing", PARALLEL AND DISTRIBUTED SYSTEMS (ICPADS), 2011 IEEE 17TH INTERNATIONAL CONFERENCE ON, IEEE, 7 December 2011 (2011-12-07), pages 982-987, XP032087390, DOI: 10.1109/ICPADS.2011.149 ISBN: 978-1-4577-1875-5
- DIRK TROSSEN ET AL: "NORS: An Open Source Platform to Facilitate Participatory Sensing with Mobile Phones", MOBILE AND UBIQUITOUS SYSTEMS: NETWORKING&SERVICES, 2007. MOBIQUITOUS 2007. FOURTH ANNUAL INTERNATIONAL CONFERENCE ON, IEEE, PISCATAWAY, NJ, USA, 6 August 2007 (2007-08-06), pages 1-8, XP031230295, ISBN: 978-1-4244-1024-8
- DELPHINE CHRISTIN ET AL: "A survey on privacy in mobile participatory sensing applications", JOURNAL OF SYSTEMS & SOFTWARE, ELSEVIER NORTH HOLLAND, NEW YORK, NY, US, vol. 84, no. 11, 29 June 2011 (2011-06-29) , pages 1928-1946, XP028388681, ISSN: 0164-1212, DOI: 10.1016/J.JSS.2011.06.073 [retrieved on 2011-07-06]

## Description

### Technical Field

The description generally relates to sensor networks, and more in particular relates to sensor networks for measuring environmental phenomena.

### Background

Sensors are used to monitor the environment, houses, industrial equipment or the like. Sensors are devices that measure a physical, biological, or chemical parameter (often called "phenomenon") and that return a signal which corresponds to the parameter. In most cases, the signal is an electrical signal.

While traditional sensors need to communicate the signals through wires, sensors of the digital age are equipped with analogue-to-digital converters and with radio transmitters so that the signals are communicated wirelessly. The transmitters have ranges of about (order-of-magnitude) 50 m for indoors transmission and up to 125 m for outdoor transmission. Transceivers can be coupled to microcontrollers to allow further features such as self-identification of the sensor, self-description (e.g. of the parameter), self-calibration, location and time-awareness, and data processing.

Sensors can communicate the measurement data to signal propagation devices that are located within the mentioned transceiver range. The propagation devices propagate the measurement results to central computers for processing. Propagation devices can be stationary or can be mobile. It is even possible to attach sensors directly to the propagation device. Prominent examples for mobile devices are cellular phones that not only allow users to make phone calls but that have a variety of enhanced features. Such phones are known as "smart phones", and they are more and more in ubiquitous use. The phones communicate in networks that operate according to standards such as GSM (Global System for Mobile Communications, mostly voice, short message service SMS), UMTS (Universal Mobile Telecommunications System) and LTE (Long Term Evolution, mostly data); or WLAN (Wireless Local Area Network, packed switched data).

In some sense, the mobile devices extend their network quality to the sensors so that multiple sensors can also be considered as sensor networks.

Looking at the recipient of the measurement data, the computers process data from multiple sensors (i.e. from the network), and outputs the parameters into forms suitable for humans. Measurement data can be processed to map the parameters to certain geographic areas. For example, a parameter can be a concentration of a toxic gas in the environment, or the strength of radio signals (in a particular frequency band). Using multiple mobile devices for sensing is also called "community sensing" or "participatory sensing".

However, not every sensor is able to provide useful or reliable data for processing, and the central computer needs to scrutinize the data in advance. There is an on-going need, especially for measurements that are being planned for a certain geographic area and a given measurement time, to select the most suitable sensors. Technically, a sensor selection includes a number of data exchanges between sensors, mobile devices, and network computers consuming resources, such as computation time, memory, processing hardware and the like. The publication "MobiSense - mobile network services for coordinated participatory sensing" by Reddy et al. uses a recruitment engine to recruit participants with mobile phones to join a measuring campaign.

### Summary

The prior-art problems are solved by the invention according to the independent claims 1, 12 and 13. In a computer-implemented method, a subset of sensors from a plurality of sensors is identified to participate in measuring a particular phenomenon under a given constraint. In a coupling step, a plurality of mobile devices is coupled to a computer system by a telecommunication network. In a sending step, participation requests are sent to the mobile devices. The requests include an indication of the phenomenon to be measured. In a connecting step, sensors that fit to the phenomenon are connected to the mobile devices to obtain pairs of sensors and mobile devices. In a registering step, a subset of the pairs is registered with the computer system. In an exchanging capability data step, the capability data is exchanged between the registered pairs and the computer system. The data relates to the capability of the registered pairs to participate in the measurement under the given constraint. In a selecting step, registered pairs for that the capability data comply with the given constraint are selected.

The constraint can be the location of the registered pairs in a given geographic location during a given time interval. Connecting sensors can be performed for sensors that are wireless or that are mobile, or that are both wireless and mobile. At least some of the mobile devices can be associated with human users. The devices can interact with the users prior to registering so that participation is either accepted or denied. In exchanging capability data, user-related constraints can be exchanged, so that in selecting, the combination of sensor, mobile device and user may be selected. Sending participation requests can include information regarding follow-up activities by the central computer following the completion of a measurement campaign. That information can include information regarding incentives to the users. Connecting can be performed again when a sensor in a selected pair provides measurement data to the mobile device. Selecting can comprise to compare capability data between multiple registered pairs. Connecting can be performed by a network with intermediate nodes that are connected between the mobile devices and the computer system. The intermediate nodes can be nodes of the telecommunication network.

In a further implementation, a computer-implemented method is performed by a mobile device. The device participates in measuring a particular phenomenon under a given constraint in a measurement campaign with multiple mobile devices. In a coupling step, the device is coupled with a computer system by a telecommunication network. In a receiving step, the device receives a participation request from the computer system. The request includes an indication of the phenomenon to be measured. In a connecting step, the mobile is connected to a sensor that fits to the phenomenon. In a registering step, the combination of the device with the connected sensor is registered at the computer system. In an exchanging capability data step, computer system and mobile device exchange data that relates to the capability of the mobile device in combination with the connected sensor to participate in the measurement under the given constraint. In a receiving step, the device receives a selection to participate from the computer system in case of compliance with the given constraint.

In a different aspect, a computer-program product that - when loaded into a memory of a mobile computer and being executed by at least one processor of the computer - performs the steps of the computer-implemented method.

In a further aspect, a mobile device participates in measuring a particular phenomenon under a given constraint in measurement campaigns with multiple mobile devices. The mobile device comprises: a coupler module to couple with a computer system by a telecommunication network; a receiver module to receive a participation request from the computer system, wherein the request includes an indication of the phenomenon to be measured; a connector module to connect to a sensor that fits to the phenomenon; a register module to register the combination with the connected sensor at the computer system; an exchange module to exchange capability data with the computer system, wherein the data relates to the capability of the mobile device, in combination with the connected sensor, to participate in the measurement under the given constraint; and a receiver module to receive a selection to participate from the computer system in case of compliance with the given constraint.

In a further aspect, a computer system comprises: a connector unit to a telecommunication network that couples a plurality of mobile devices to the computer system; a sender unit that sends participation requests to the mobile devices, the requests including an indication of a phenomenon to be measured under a given constraint in a measurement campaign; a register unit that registers pairs of sensors and mobile devices of the plurality of mobile devices wherein the sensors fit to the phenomenon; an exchange unit that exchanges capability data between the registered pairs and the computer system, the data relating to the capability of the registered pairs to participate in the measurement under the given constraint; and a selector unit that selects registered pairs for that the capability data comply with the given constraint.

### Brief Description of the Drawings

FIG. 1 is a block diagram of a plurality of sensors and mobile devices that communicate with a computer system. In the example, two sensor/device combinations are selected for participation in a measurement campaign under a given campaign constraint;
FIG. 2 is a block diagram - similar to that of FIG. 1 - further illustrating interaction with users resulting in acceptance or denial of participation in the campaign;
FIG. 3 is a block diagram - similar to that of FIG. 2 - further illustrating an aspect of selecting sensors, devices and users in view of a user constraint;
FIG. 4 is a block diagram of a network with sensors, devices, intermediate nodes and the central computer;
FIG. 5 is a simplified flow chart diagram of a method;
FIG. 6AB is a flow chart diagram of the method with more detail;
FIG. 7 is a timing diagram illustrating some aspects of the campaign that follows the execution of the method;
FIG. 8 is a simplified flow chart diagram of a further method.

### Detailed Description of the Drawings

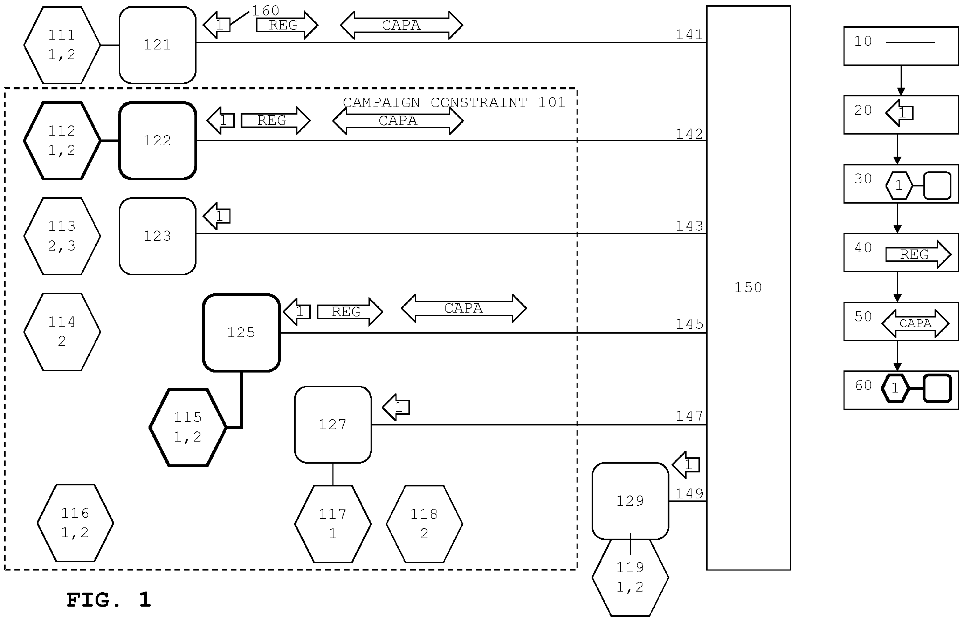

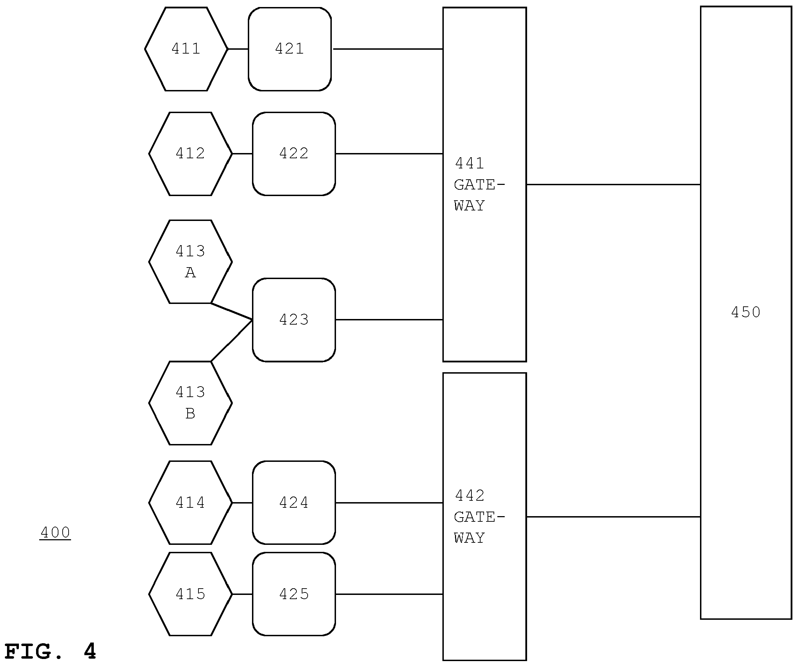

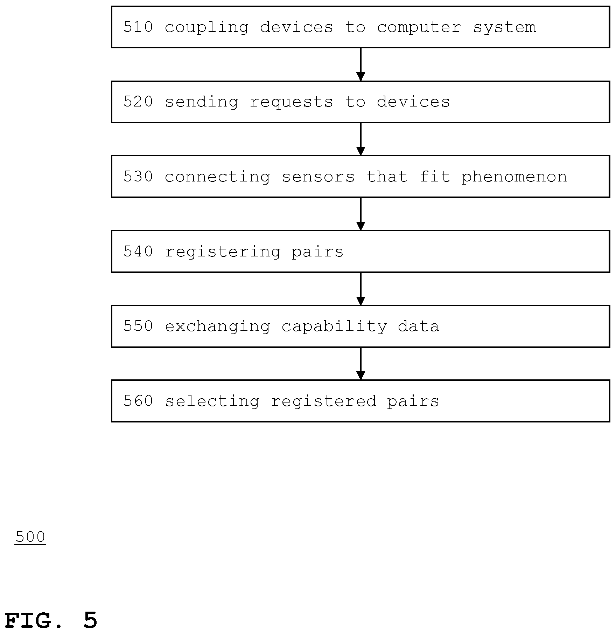

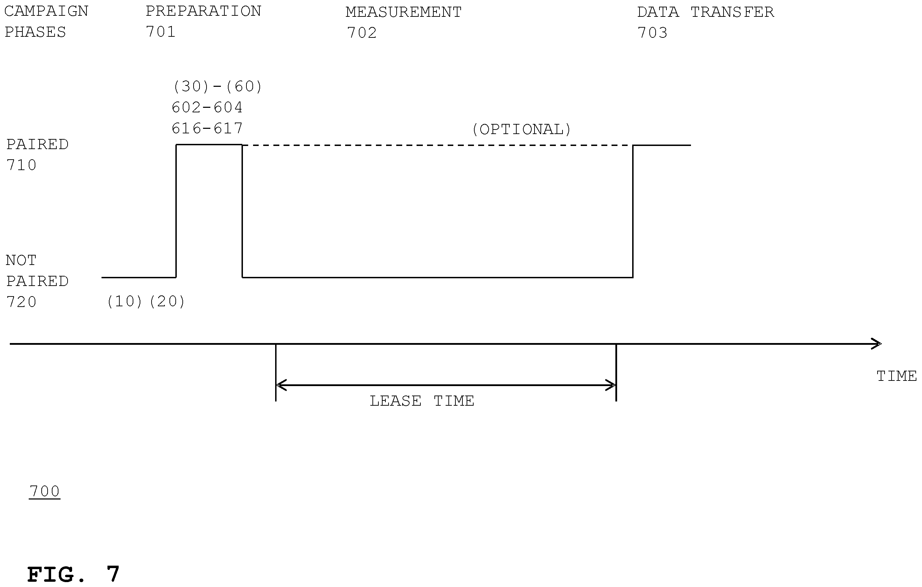

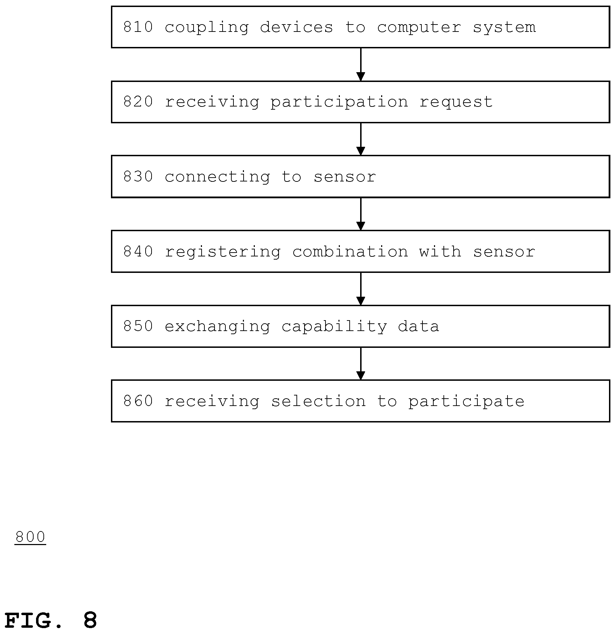

The following description starts by explaining a computer-implemented method by way of an example of a network with one central computer (FIGS. 1-3). It then looks at the architecture of a more complex network with a central computer and intermediate network nodes (gateways, FIG. 4). The description will then give examples for parameters and constraints (such as campaign constraints; sensor, device or user constraints) and continues with explaining method details (FIG. 5-6). The description ends with a short outlook to activities that follow the execution of the method (FIG. 7) and illustrates a method with the focus on a mobile device (FIG. 8).

Some figures will symbolize sensors by hexagons, mobile devices by squares (with round corners), human users by circles, and other computer equipment (such as network nodes or central computers) by rectangles.

Since method step consecutively decrease the number of sensors (and mobile devices) that participate in measuring, the figures illustrate sensors and devices that are no longer used by dashed lines.

Parameters (or "phenomena") indicate a type of the sensor. Examples for physical parameters are humidity, ambient temperature, light intensity, air pressure (e.g., barometric pressure), vibration, or radioactive radiation.

Constraints are conditions that are further relevant for conducting measurement. The constraints can be classified into campaign constraints (e.g., location, duration), sensor constrains (e.g. accuracy), device constraints (e.g., bandwidth to transmit data) or user constraints (e.g., billing schemes). Constrains occur usually in combination, and there are usually one or more constraints in each class to consider.

FIG. 1 is a block diagram of a plurality of sensors and mobile devices that communicate with a computer system. In the example, two sensor/device combinations are selected for participation in a measurement campaign under a given campaign constraint.

Sensors 111, 112, 113, 114, 115, 116, 117, 118 and 119 -symbolized by hexagons - are sensors for particular phenomena 1, 2 or 3 (or parameters). For example, sensors 111, 112, 115, 116 and 119 are sensors for parameters 1 and 2; sensor 113 is a sensor for parameters 2 and 3; sensors 114 and 118 are sensors for parameter 2 only; and sensor 117 is a sensor for parameter 1 only.

Mobile devices 121, 122, 123, 125, 127 and 129 - symbolized by "round" squares are communicatively coupled to computer system 150 by a telecommunication network. The network is symbolized by connections 141, 142, 143, 145, 147, 149. The network can be, for example, a cellular network. The connections can be established, for example, by establishing data connections to and from computer 150.

A dashed frame around sensors 112, 113, 114, 115, 116, 117, 118 and devices 122, 123, 125, 127 symbolizes campaign constraint 101. For example, the campaign requires that sensors and devices are to be located within a given geographic area. The campaign constraint could be enhanced by further criteria such as a given time interval (e.g., during a particular day from 0h to 24 h, or during a particular week; or periodically, every day, every week).

For convenience of explanation, on the right side, FIG. 1 illustrates a simplified method flow chart (with symbols):
(10) coupling (a line for a connection),
(20) sending request (arrow),
(30) connecting (a line between sensor and device to indicate a sensor/device pair),
(40) registering (an arrow for a registration response "REG");
(50) exchanging (a bi-directional arrow "CAPA" for a capabilities data exchange); and
(60) selecting (a pair in bold lines for being selected).

More in detail, FIG. 1 illustrates an example scenario for a measurement campaign to measure parameter 1 (e.g., a radio signal strength) under a given constraint 101 (e.g., geographic area). The number of sensors and devices that are candidates for participating in the campaign is getting smaller and smaller.

In step (10), mobile devices 121, 122, 123, 125, 127, 129 are coupled to computer system 150 by a telecommunication network (for example, with connections 141, 142, 143, 145, 147, 149).

In step (20), computer 150 uses the network and sends participation requests 160 to the mobile devices 121, 122, 123, 125, 127, 129. Requests 160 include an indication of the parameter to be measured. In the example, this is parameter 1. The network can send requests 160 substantially simultaneously (broadcasting) or consecutively (multicasting). Note that in the example, request 160 does not include further detail, for example, the request is not adapted to constraints. It could be adapted to constraints, but the request may be kept as short (and resource saving) as possible.

Optionally, the participation requests can include information regarding follow-up activities by the central computer that following the completion of a campaign, such as information regarding incentives.

In step (30), sensors 111, 112, 115, 117, 119 that fit to parameter 1 are coupled with the mobile devices 121, 122, 125, 127, 129 in pairs 111/121, 112/122, 115/125, 117/127, 119/129 of sensors and mobile devices. The figure illustrates pairing with lines between sensor and device. In the example, sensors 113, 114, 116 and 118 are not connected, because either the parameter does not fit (113, 114, and 118) or because (116) there is no mobile device within transmission range.

In step (40), pairs 111/121, 112/122, 115/125 are registered with computer system 150. For registration, computer 150 updates, for example, a data base. It is not necessary to register all pairs, there might be reasons not to register a pair (e.g., failed authentication or failed authorization by computer 150). In the example, pairs 117/127 and 119/129 are not registered.

Until here, the steps are performed with relatively low resource consumption (e.g., data amount or data transmit time per transaction) for a relatively high number of sensors and devices. The following steps change that principle: a relatively low number of remaining sensors and devices are now subject to transactions that require relatively high resource consumption because of complexity of the constraints. In other words, non-complex filtering is done first, and complex negotiations are done second.

In step (50), registered sensor/device pairs 111/121, 112/122, 115/125 exchange capability data (CAPA) with computer system 150. Exchanging capability data between pairs (sensors/devices) and computer system 150 instead of, for example, exchanging data between sensors and the computer and between mobile devices and the computer simplifies processing. The data (CAPA) relates to the capability of the registered pairs 111/121, 112/122, 115/ 125 to participate in the measurement campaign under the given constraint 101. In the example, sensor 111/ device 121 do not comply with constraint 101.

In step (60), registered pairs 112/122, 115/125 (for that the capability data comply with a given constraint 101) are selected for participating in the campaign.

To summarize, there was a number of sensors and devices available, in a first pass (steps (10) (20) (30) (40)), that number was reduced significantly without using much resources; in the second pass (steps (50)(60)), that number was further reduced.

The description stays with FIG. 1 to explain further aspects. The mobile devices are, for example, mobiles phones, table PCs, PDAs, etc. that are primarily used by human users for communication; but that - in the context of the present invention - have a secondary use in communicating sensor data. Mobile devices can also be computers in vehicles. For example, speed and position data of cars can be collected to detect traffic congestions.

Looking from the mobile devices, the sensors can be external to the devices, or can be internal to the devices. External sensors communicate with the devices by radio transmitters (signals to the device) or by radio transceivers (signals to and from the device) over relatively short transmission ranges. Protocols are, for example, Bluetooth, ZigBee and DASH7.

In the example of FIG. 1, sensors 114 and 116 are outside the transmission ranges to mobiles devices, so that communication is not possible.

Internal sensors are built into the mobile devices or are mechanically attached to them. In this case, the communication between sensor and device can be established by wires. In the example of FIG. 1, sensor 119 is an internal sensor in device 129 (illustrated by adjoining symbols). Sensor 119 could be a radio transceiver module built into the device, or sensor 119 could be the speedometer in a car.

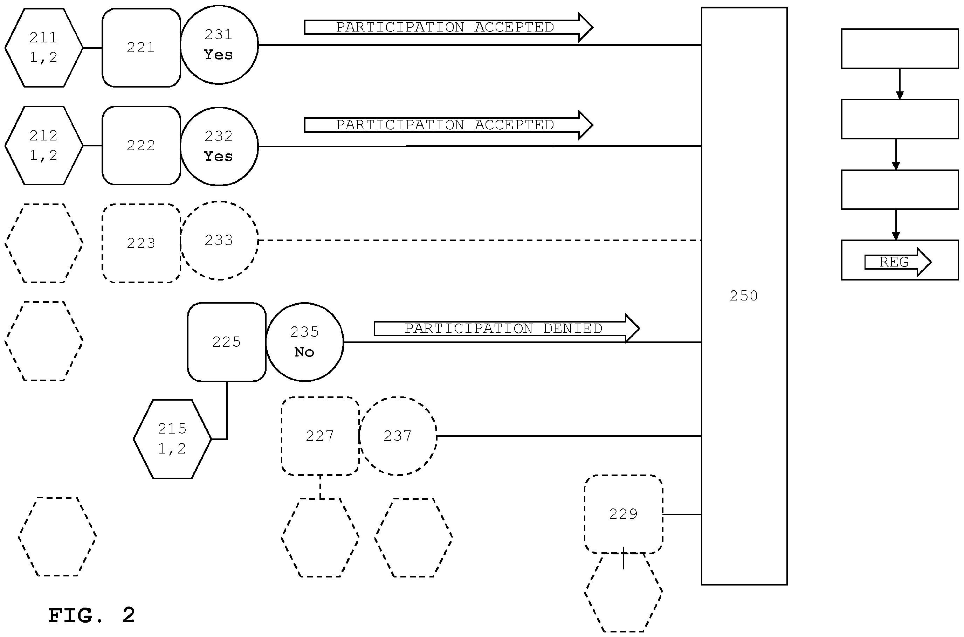

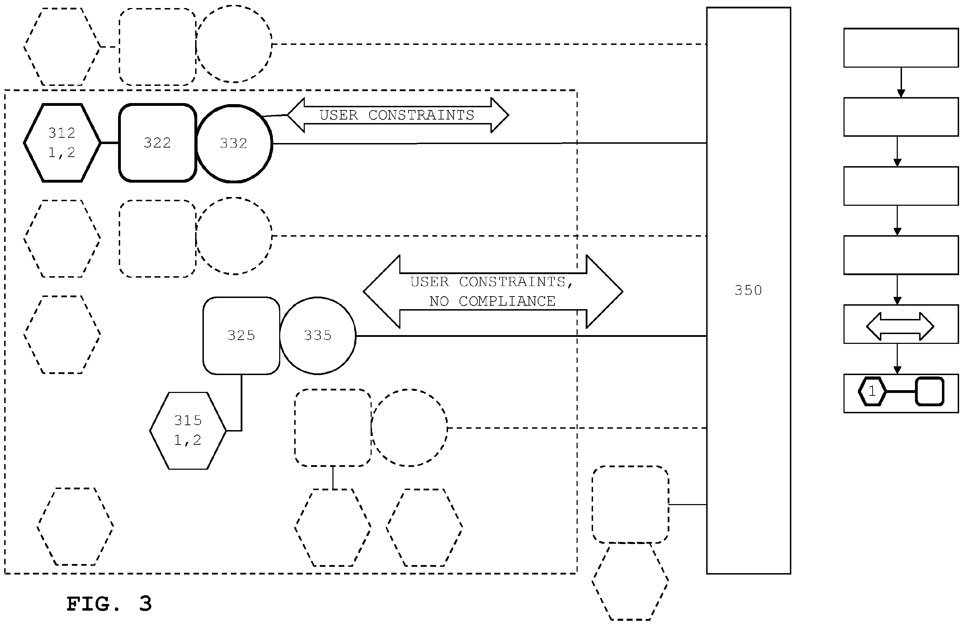

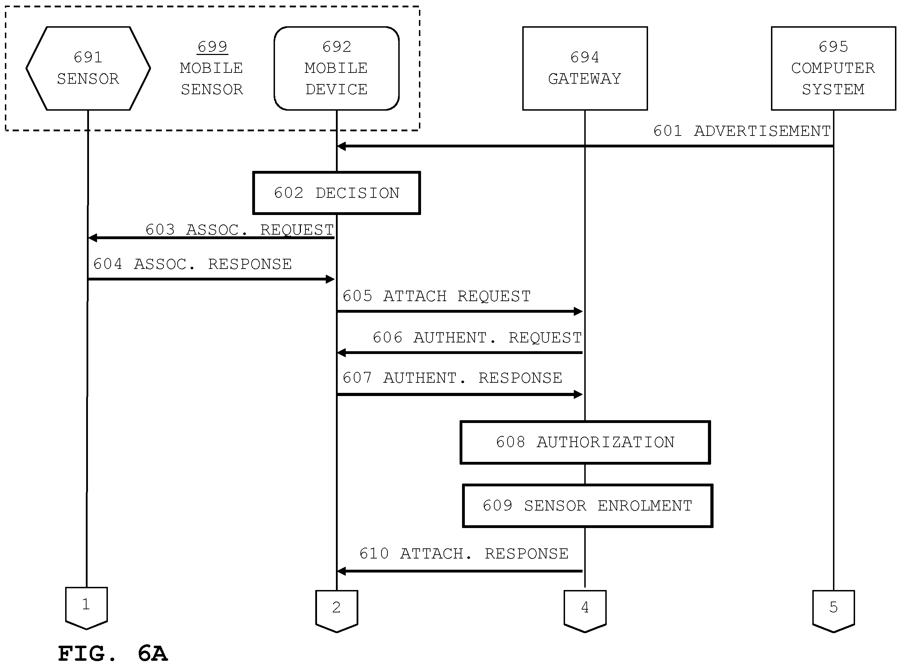

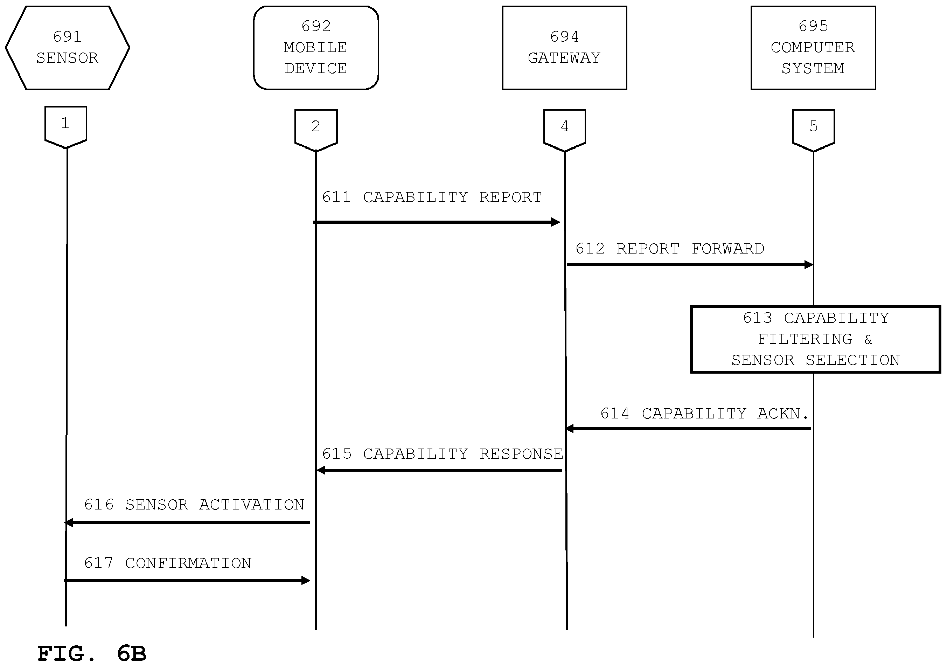

Further aspects are explained in the following figures, for example, regarding user interaction (FIG. 2), user constraints (FIG. 3), network topology (FIG. 4), authentication and authorizations (FIG. 6).

FIG. 2 is a block diagram - similar to that of FIG. 1 - further illustrating interaction with users resulting in acceptance or denial of participation in the campaign.

The mobile devices illustrated in FIG. 1 are not necessarily mobile devices that are carried by a human user as "user equipment". Devices can also be operated without interaction with human users. In FIG. 2, devices 221, 222, 223, 225 and 227 are assumed to be operated by human users 231, 232, 233, 235 and 237 (circle symbols). Device 229 may be a non-user device.

Users and devices can interact prior to registering so that participation is either accepted or denied. In the example, pairs 211/221, 212/222, 215/225 are candidates for participation. (Other sensors and devices are illustrated dashed). Users 231, 232 (of devices 221, 222) do accept the participation, and user 235 (of device 225) denies the participation. Both acceptance and denial responses may be returned to computer 250.

FIG. 3 is a block diagram - similar to that of FIG. 2 - further illustrating an aspect of selecting sensors, devices and users in view of a user constraint. In exchanging (50) capability data, user-related constraints can be exchanged as well, so that in selecting (60), the combination of sensor 312, mobile device 322 and user 332 is selected.

While in the example of FIG. 1, two pairs had been selected, the example of FIG. 3 introduced further constraints that are related to the user. For example, during negotiations (in step (50)) user 332 indicates compliance with a billing model (relating to payment of data transfer) and with data protection rules, so that measurement data can be transmitted. Other users, such as user 335 - although sensor 315 and device 325 might comply with the campaign constraint - have introduced a constraint that prevents him/her from participating.

Instead of user constraints, other constraints can be considered, such as sensor constraints, device constraints or combinations thereof.

FIG. 4 is a block diagram of network 400 with sensors 411, 412, 413A, 413B, 414, 415, mobile devices 421, 422, 423, 424, 425, intermediate nodes 441, 442 and central computer 450. Connecting is performed by network 400 with gateways 441, 442 that are connected between mobile devices 421, 422, 423, 424, 425 and the computer system 450. Looking from a network topology point of view, the gateways are intermediate nodes in that network. Introducing a hierarchy with intermediate nodes and shifting tasks to these intermediate nodes reduces complexity and network traffic with computer 450.

Intermediate nodes 441 / 442 (gateways) can be nodes of a telecommunication network, for example, can be switching centres, or base stations. Usually, base stations and computer system 150 communicate via cables, so that there is a cost aspect to be considered in relatively higher costs for the communication between the devices and the gateways (air interface is the main cost contributor) and the relatively lower costs for the communication network between the gateways and the computer. It is part of the approach to focus communication with high data demand (e.g., step (50) in FIG. 1; steps in FIG. 6B) on the lower cost part of the network.

The description will now refer to examples for parameters. As mentioned, the parameters (or "phenomena") indicate a type of the sensor. A single sensor can supply data for more than one parameter, but for simplicity, it can be assume that a single sensor measures only a single parameter.

As mentioned, examples for physical parameters are humidity, ambient temperature, light intensity, air pressure (e.g., barometric pressure), vibration, or radioactive radiation.

A further example parameter is the strength of radio signals for frequencies that are used for WLAN, UMTS, WiMAX, or LTE networks. The above-mentioned campaign uses this parameter to identify white spots. Such activities are also referred to as "spectrum sensing". The resulting map could be a spectrum occupancy map that is forwarded to spectrum brokers. The sensor for that parameter could be a radio transceiver module (built into the mobile device) or a standalone sensor device.

The position (or location) of the mobile device can be obtained, for example, by a GPS module (Global Positioning System), or by a Galileo module (positioning system being developed in Europe). Position sensors are in ubiquitous use in mobile devices.

Due to the relatively short distance between sensor and device, the position of the device and the position of the sensors (which do not necessarily have their own position module) can be assumed to be identical.

A digital compass may use share the GPS/Galileo module to indicate the geographic direction of a device position that changes.

The speed of a vehicle (in the mentioned use-case for detecting traffic congestions) can be measured by speedometer or other equipment in a car, or by accelerometers in phones.

Examples for biological parameters are: body temperature of the user, heart beat, blood pressure and skin resistance.

Examples for chemical parameters are in the concentration of gases in atmosphere, such as the concentration of carbon monoxide (CO), carbon dioxide (CO2), ozone (O3), nitrogen monoxide (nitric oxide, NO), nitrogen dioxide (NO2), or hydrogen sulphide (H2S).

The description will now refer to constraints. As mentioned, the constraints can be classified into campaign constraints, sensor constrains, device constraints or user constraints. Constrains occur usually in combination, and there are usually one or more constraints in each class to consider.

As used in the above example, campaign constraints can be the geographic area for the measurement (cf. constraint 101 in FIG. 2) and the duration of the measurement (e.g., a week). The duration or time interval during that a sensor is booked for providing measurement data is also called "sensor lease".

Sensor constraints and device constraints are circumstances that are related to the sensor or to the device, or to both. For example, the available bandwidth of a mobile device to communicate data to the network can be limited. There might be broadband communication available (e.g., UMTS, LTE), or in some cases, GPRS (general packet radio service), SMS (short message service) might be the only option. Depending on the frequency of measurements (or sampling time, time between consecutive measurements) and depending on the amount of data per measurement, broadband communication might be required.

Vendor information of sensors or devices can limit the applicability as well. For example, devices of a particular vendor might not be useful for a particular measurement. In same cases, measurement might require the certification and/or regulatory compliance by a vendor.

The model or serial number of the sensor or of the device might be relevant. Although sensors are operating and technically are providing data, some sensor models might be taken out of consideration due to known issues.

Historic data - if available - can be considered as well. For example, some sensors might exhibit problems with calibration and are therefore registered on a black-list. The same principle applies to devices or even to users as well.

Or, software constraints (firmware of the sensors, or the device; or operating systems) might be applicable.

Battery status and energy requirements might have to be taken into account as well. For example, gas sensors require relatively much energy, but the battery of a particular sensor might be discharged soon.

User constraints are driven by user preferences. For example, there are users who have the devices switched "on" all of the time; but some other users have switched it "on" only during day-time. Users are moving, some users go out of the geographic area if interest; some stay in that area more often. The expected location (that is related to a location constraint) can be derived from historic data (and potentially from schedules that are available on the devices).

Billing particulars are potentially to be taken into account as well. For example, data communication with so-called "flat rate" billing models is charged differently than in case of volume-based billing (usage-based billing).

The user might frequently go to locations where data measurement might not be possible (or not allowed). For example, using mobile phones might not be allowable in hospitals. Measurement campaigns might therefore exclude such places, and there is no need to let such users participate.

User movement might matter. A users who is about to leave a geographic location (i.e., the geographic area of the campaign) is likely not participating.

The constraints had been presented by differentiating in view of origin. This is convenient of explanation, but as mentioned constraints may depend on each other. For example, the devices constraint of available bandwidth can be related to the user spending more or less money, so in some aspect that constraint is also a user-specific one.

The mentioned constraints are just example, there might be other constraints to be taken into account, such as legal constraints, for example, relating to data protection, Intellectual Property Rights, regulatory issues or the like.

Due to the high number of constraints, the processing between the computer and the mobile devices is performed in method steps at the end (exchanging capability data) so that these steps are not to be performed for all devices.

FIG. 5 is a simplified flow chart diagram of computer-implemented method 500 for identifying a subset of sensors from a plurality of sensors to participate in measuring a particular phenomenon under a given constraint. In a coupling step 510, a plurality of mobile devices (e.g., 121, 122, 123, 125, 127 and 129) is coupled to a computer system (e.g., 150) by a telecommunication network (e.g., 141, 142, 143, 145, 147 and 149). In a sending step 520, participation requests (e.g., 160) are sent to the mobile devices. The requests include an indication of the phenomenon (1) to be measured. In a connecting step 530, sensors (e.g., 111, 112, 115, 117, 119) that fit to the phenomenon, are connected to the mobile devices (e.g., 121, 122, 125, 127, 129) to obtain pairs (e.g., 111/121, 112/122, 115/125, 117/127, 119/129) of sensors and mobile devices. In a registering step 540, a subset of the pairs (e.g., 111/121, 112/122, 115/125) is registered with the computer system (e.g., 150). In an exchanging capability data (CAPA) step 550, the capability data is exchanged between the registered pairs and the computer system. The data (CAPA) relates to the capability of the registered pairs to participate in the measurement under the given constraint. In a selecting step 560, registered pairs for that the capability data comply with the given constraint are selected.

FIG. 6 is a flow chart diagram of the method with more detail. The figure illustrates activities in relation to sensor 691, mobile device 692, gateway 694 and computer system 695 (thin vertical lines).

FIG. 6 has to parts: FIG. 6A concentrates on the initial steps (10) to (40) (cf. method 500) with many mobile sensors and small data volume exchange; FIG. 6B concentrates on the follow-up steps (50) and (60) with potentially less mobile sensors but higher data volume exchange.

Sensor 691 and mobile device 692 can be considered as mobile sensor 699. There are multiple mobile sensors 699 to be expected in real implementations. Gateway 694 has been introduced in FIG. 4 (intermediate node), in real implementations there are multiple gateways, but the number of gateways is much smaller than the number of mobile sensors.

Computer system 695 (cf. system 150/250/350) can serve as a support node for the campaign. Persons who are in charge of planning the campaign interact with computer system 695 as users.

In step 601, computer system 695 sends out a measurement advertisement (cf. participation requests 160 in FIG. 1). In the figure, the arrow that illustrates advertisement 601 crosses the "gateway line". It does not matter if advertisement 601 is communicated directly by computer system 695 or indirectly through gateway(s) 694.

The advertisement can include data that describe the campaign, including campaign constraints (for example, geographic location and time interval), parameters (phenomena) to be monitored; and other data, such as data that identifies incentive (or reward) schemes for the users. For example, participation in a campaign could be rewarded for the users (of the mobile devices) by monetary reimbursement, by credit or collection points, by free-of-charge air time (to talk over the phone) or the like.

The incentive information in the request is an example for the above-mentioned follow-up activities by the central computer that following the completion of a campaign.

As mentioned above, the advertisement can follow a broadcast pattern (substantially simultaneous advertisement to all mobile devices), a multicast pattern (consecutive advertisement), a mobile device / user specific pattern, or the like.

In step 602, mobile device 692 interacts with its user to receive a decision to participate in the campaign or not. Step 602 can be performed at a later point in time (cf. FIG. 2 request accepted / denied). To support the decision, mobile device 692 can compare (juxtapose) the received data (e.g., location, time and parameter) for the campaign with data available at the device (e.g., expected location during that time, availability of sensors for the parameter). The data can also be available at other computers of the network, for example, scheduling data indicate the expected location (of the device/user) in the future, during the campaign.

Step 602 can include a calculation of costs, in the sense of monetary costs for the user in participating (phone network subscription costs, optionally to be calculated by an online charging system, etc.), and in the sense of resource costs (e.g., bandwidth consumption, energy consumption, processing consumption).

In case of a negative decision (participation request denied), the method stops here at step 602, so that further activities by mobile device 692, gateway 694 and/or computer system 695 are not required.

In step 603, mobile device 692 sends an Association and Capability Discovery Request to sensor 691.

In step 604, sensor 691 returns a response, including, for example, a globally unique identifier (like the Media Access Control (MAC) address of the sensor), and a description of technical capabilities (like measurement parameters and residual battery level).

It is advantageous to exchange such information, to minimize for example the resource consuming overhead of periodic keep-alive message exchanges between sensor 691 and device 692. Further, device 692 receives information on the status and properties (of sensor 691) that is up-to-date.

In step 605, device 692 initiates a so-called attachment procedure. Device 692 sends the globally unique identifier (of sensor 691), a globally unique identifier of the device 692 (e.g., its mobile subscriber identity, phone number, IP address etc.) to gateway 694.

Step 605 triggers the following steps to mutually authenticate device 692 and gateway 694, in steps 606 (authentication request to the gateway) and 607 (authentication response from the gateway).

The combination of authentication steps 606 and 607 refers to mobile sensor 699 as the combination ("pair") of sensor and device. The combination saves resources, for example, by reducing the number of data exchanges via radio interface (in comparison to a separate sensor-to-gateway authentication).

Having performed authentication - both mobile device 692 and gateway 694 "know" the identity of each other - the implementation of the method continues by answering the question if mobile sensor 699 is allowed to participate in the campaign or not.

In step 608, gateway 694 has the opportunity to filter out non-authorized mobile devices (or sensors, or users).

In step 609 - upon successful authorization - gateway 694 enrols mobile sensor 699 (i.e. the pair of sensor and device) in a registry (or any other types of data storage, such as a database).

In step 610, the enrolment is communicated to mobile device 692 (attachment response).

Variations in the order of steps are possible, steps 601 to 610 are performed with many mobile sensors, but only some candidates remain. The more data-heavy communications with the remaining candidates are now explained in connection with FIG. 6B.

In steps 611-615, mobile device 692 and computer system 695 engage in protocol dialogues to exchange data regarding the capabilities of the mobile sensors (optionally, of the user), and - if needed - for agreeing on the selected sensor types. Further, device 692 will reserve sensor 691 for the campaign during the time interval of the campaign (so-called sensor lease term), and record the frequency of measurements (or sampling time, time between consecutive measurements).

More in detail, in steps 611 device 692 sends a capability report to gateway 694; in step 612, gateway 694 forwards the report to computer system 695.

In step 613, computer system 695 compares the reported capabilities with the requirements for the campaign (campaign constraints) and - optionally - with the reported capabilities of other mobile sensors. In other words, selecting comprises to compare capability data between multiple pairs.

In step 614, computer system 695 acknowledges the selection to gateway 694; in step 625, gateway 694 forwards the acknowledgement (capability response) to mobile device 292.

Steps 611/612 and 614/615 can be combined, for example, by letting device 692 communicate with computer system 695 directly.

In step 616, mobile device 692 activates sensor 691 to actually perform the measurement. At that time, there is no more preparatory data exchange with gateway 694 (or with computer system 695) required. In step 617, sensor 691 confirms receipt of the activation.

A selected device / sensor pair is now ready to participate in the measurement campaign. During the campaign, the pair will send measurement data to computer system 695 directly, or via gateway 694.

FIG. 7 is a timing diagram illustrating some aspects of campaign 700 that follows the execution of the method.

The diagram illustrates campaign phases and pairing states over time (left to right). Campaign phases are campaign preparation 701, measurement 702 and data transfer 703. Measurement 702 and data transfer 703 phases can be repeated in multiple sequences. In that case, the lease time would be longer.

During campaign preparation 701, the above-explained method is executed. Pairing is not required all the time, sensors and devices can be unpaired 720 during some steps (cf. (10), (20) in FIG. 1) and need to be paired only for the steps in that sensor and device communicate with each other (cf. (30) in FIG. 1, 603-604, 616-617 in FIG. 6).

During measurement phase 702 (i.e. during lease time), sensors and devices can remain paired, but that is not required.

Pairing resumes for phase 703 when data is transferred from the sensor to the computer via the device (and optionally via the gateways). In the example of FIG. 7, data transfer is assumed after measurement; it is also possible to transfer data while the sensor continues to measure.

In other words, connecting is performed again when a sensor in a selected pair provides measurement data to the (mobile) device.

FIG. 8 is a simplified flow chart diagram of further method 800 that focuses on the mobile device. Computer-implemented method 800 is a method for a mobile device (e.g., 121, 122, 123, 125, 127, 129 in FIG. 1) to participate in measuring a particular phenomenon under a given constraint in a measurement campaign with multiple mobile devices. In a coupling step 810, the mobile device is being coupled with a computer system (e.g., 150) by a telecommunication network (e.g., 141, 142, 143, 145, 147 and 149). In a receiving step 820, the mobile device receives a participation request (e.g. 160) from the computer system 150. The request includes an indication of the phenomenon to be measured. In a connecting step 830, the mobile device is connected to a sensor (e.g., 111, 112, 115, 117 and 119) that fits to the phenomenon. In a registering step 840, the combination of the mobile device with the connected sensor is registered at the computer system. In an exchanging capability data (CAPA) step 850, the mobile device communicates with the computer system to exchange the data that relates to the capability of the mobile device in combination with the connected sensor to participate in the measurement under the given constraint. In a receiving step 860, in case of compliance with the given constraint, the mobile device receives a selection to participate from the computer system.

The step for the mobile device can be modified, for example as explained above in connection with FIG. 5.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site (e.g., in the vehicle) or distributed across multiple sites (e.g. central computer) and interconnected by a communication network. The methods can all be executed by corresponding computer products on the respective devices.

Method steps of the invention can be performed by one or more programmable processors executing a computer program to perform functions of the invention by operating on input data and generating output. Method steps can also be performed by, and an apparatus of the invention can be implemented as, special purpose logic circuitry, e.g., an FPGA (field programmable gate array), a DSP (digital signal processor) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also be provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Mobile devices can be, for example, smart phones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks. The computing system can include clients and servers. A client and server are generally remote from each other and typically interact through a communication network. The relationship of client and server arises by virtue of computer programs running on the respective computers and having a client-server relationship to each other, or a peer-to-peer relationship.

## Claims

1. Computer-implemented method (500) for identifying a subset of sensors (112, 115) from a plurality of sensors (111, 112, 113, 114, 115, 116, 117, 118, 119) to participate in measuring a particular phenomenon (1) under a given constraint (101), the method (500) comprising:
coupling (510) a plurality of mobile devices (121, 122, 123, 125, 127, 129) to a computer system (150) by a telecommunication network (141, 142, 143, 145, 147, 149);
sending (520) participation requests (160) to the mobile devices (121, 122, 123, 125, 127, 129), the requests (160) including an indication of the phenomenon (1) to be measured;
connecting (530) sensors (111, 112, 115, 117, 119) that fit to the phenomenon (1) to the mobile devices (121, 122, 125, 127, 129) to obtain pairs (111/121, 112/122, 115/125, 117/127, 119/129) of sensors and mobile devices;
registering (540) a subset of the pairs (111/121, 112/122, 115/125) with the computer system (150);
exchanging (550) capability data (CAPA) between the registered pairs (111/121, 112/122, 115/125) and the computer system (150), the data (CAPA) relating to the capability of the registered pairs (111/121, 112/122, 115/125) to participate in the measurement under the given constraint (101); and
selecting (560) registered pairs (112/122, 115/125) for that the capability data comply with the given constraint (101);
the method **characterized in that** coupling (510), sending (520), connecting (530), and registering (540) are performed with relatively low resource consumption for a relatively high number of sensors and devices, and exchanging (550) and selecting (560) are performed with a relatively low number of remaining sensors and devices that are subject to transactions that require a relatively high resource consumption.

2. Method (500) according to claim 1, wherein the constraint (101) is the location of the registered pairs (112/122, 115/125) in a given geographic location (101) during a given time interval.

3. Method (500) according to any of claims 1 to 2, wherein connecting (510) sensors (111, 112, 115, 117, 119) is performed for sensors that are wireless or mobile.

4. Method (500) according to any of claims 1 or 2, wherein at least some of the mobile devices (221, 222, 223, 225, 227) are associated with human users (231, 232, 233, 235, 237), that interact with the users prior to registering (540) so that participation is either accepted (231, 232) or denied (235).

5. Method (500) according to claim 4, wherein in exchanging (550) capability data, user-related constraints are exchanged, so that in selecting (560), the combination of sensor (312), mobile device (322) and user (332) is selected.

6. Method (500) according to any of claims claim 4 to 5, wherein sending (520) participation requests includes information regarding a follow-up activities by the central computer following the completion of a measurement campaign.

7. Method (500) according to claim 6, wherein the information includes information regarding incentives to the users.

8. Method (500) according to any of claims 1 to 7, wherein connecting is performed again when a sensor (112, 115) in a selected pair (112/122, 115/125) provides measurement data to the mobile device (122, 125).

9. Method (500) according to any of claims 1 to 8, wherein selecting comprises to compare capability data between multiple registered pairs.

10. Method (500) according to any of claims 1 to 9, wherein connecting is performed by a network (400) with intermediate nodes (441, 442) that are connected between the mobile devices (421, 422, 423, 424, 425) and the computer system (450).

11. Method (500) according to claim 10 wherein the intermediate nodes are nodes of the telecommunication network.

12. Computer-program product that - when loaded into a memory of a computer and being executed by at least one processor of the computer - performs the steps of the computer-implemented method according to any of claims 1 to 11.

13. Computer system (150) comprising: a connector unit to a telecommunication network (141, 142, 143, 145, 147, 149) to couple a plurality of mobile devices (121, 122, 123, 125, 127, 129) to the computer system (150); a sender unit to send participation requests (160) to the mobile devices (121, 122, 123, 125, 127, 129), the requests (160) including an indication of a phenomenon (1) to be measured under a given constraint (101) in a measurement campaign; a register unit to register pairs (111/121, 112/122, 115/125) of sensors and mobile devices (121, 122, 125) of the plurality of mobile devices (111, 112, 115), wherein the sensors fit to the phenomenon (1); an exchange unit that exchanges capability data (CAPA) between the registered pairs (111/121, 112/122, 115/125) and the computer system (150), the data (CAPA) relating to the capability of the registered pairs (111/121, 112/122, 115, 125) to participate in the measurement under the given constraint (101); and a selector unit to select registered pairs (112/122, 115/125) for that the capability data comply with the given constraint (101); **characterized in that** the connector unit, the sender unit, and the register unit are adapted to perform steps with relatively low resource consumption for a relatively high number of sensors and devices, and the exchange unit and the selector unit are adapted to perform steps with a relatively low number of remaining sensors and devices that are subject to transactions that require a relatively high resource consumption.

## Patentansprüche

1. Computerimplementiertes Verfahren (500) zum Identifizieren einer Untergruppe von Sensoren (112, 115) aus einer Vielzahl von Sensoren (111, 112, 113, 114, 115, 116, 117, 118, 119) zum Teilnehmen am Messen eines bestimmten Phänomens (1) unter einer gegebenen Randbedingung (101), wobei das Verfahren (500) Folgendes umfasst:
Verbinden (510) einer Vielzahl von Mobilgeräten (121, 122, 123, 125, 127, 129) mit einem Computersystem (150) durch ein Telekommunikationsnetzwerk (141, 142, 143, 145, 147, 149);
Senden (520) von Teilnahmeanfragen (160) an die Mobilgeräte (121, 122, 123, 125, 127, 129), wobei die Anfragen (160) eine Angabe des zu messenden Phänomens (1) enthalten;
Anschließen (530) von Sensoren (111, 112, 115, 117, 119), die zu dem Phänomen passen (1), an die Mobilgeräte (121, 122, 125, 127, 129), um Paare (111/121, 112/122, 115/125, 117/127, 119/129) von Sensoren und Mobilgeräten zu erhalten;
Registrieren (540) einer Untergruppe der Paare (111/121, 112/122, 115/125) im Computersystem (150);
Austauschen (550) von Fähigkeitsdaten (CAPA) zwischen den registrierten Paaren (111/121, 112/122, 115/125) und dem Computersystem (150), wobei sich die Daten (CAPA) auf die Fähigkeit der registrierten Paare (111/121, 112/122, 115/125) beziehen, an der Messung unter der gegebenen Randbedingung (101) teilzunehmen; und
Auswählen (560) registrierter Paare (112/122, 115/125), so dass die Fähigkeitsdaten der gegebenen Randbedingung (101) entsprechen;
wobei das Verfahren **dadurch gekennzeichnet ist, dass** das Verbinden (510), Senden (520), Anschließen (530), und Registrieren (540) mit relativ geringem Ressourcenverbrauch für eine relativ hohe Anzahl von Sensoren und Geräten ausgeführt wird, und dass der Schritt des Austauschens (550) und Auswählens (560) mit einer relativ geringen Anzahl verbleibender Sensoren und Geräte ausgeführt wird, die Transaktionen unterliegen, welche einen relativ hohen Ressourcenverbrauch erfordern.

2. Verfahren (500) nach Anspruch 1, wobei die Randbedingung (101) die Position der registrierten Paare (112/122, 115/125) in einer gegebenen geographischen Position (101) während eines gegebenen Zeitintervalls ist.

3. Verfahren (500) nach einem der Ansprüche 1 bis 2, wobei das Anschließen (510) der Sensoren (111, 112, 115, 117, 119) für Sensoren ausgeführt wird, die drahtlos oder mobil sind.

4. Verfahren (500) nach einem der Ansprüche 1 oder 2, wobei mindestens einige der Mobilgeräte (221, 222, 223, 225, 227) menschlichen Nutzern (231, 232, 233, 235, 237) zugeordnet sind, die vor dem Registrieren (540) mit den Nutzern interagieren, so dass die Teilnahme entweder akzeptiert (231,232) oder abgelehnt (235) wird.

5. Verfahren (500) nach Anspruch 4, wobei beim Austauschen (550) von Fähigkeitsdaten nutzerbezogene Randbedingungen ausgetauscht werden, so dass beim Auswählen (560) die Kombination von Sensor (312), Mobilgerät (322) und Nutzer (332) ausgewählt wird.

6. Verfahren (500) nach einem der Ansprüche 4 bis 5, wobei das Senden (520) von Teilnahmeanfragen Informationen bezüglich Folgeaktivitäten des Zentralcomputers nach Abschluss einer Messkampagne enthält.

7. Verfahren (500) nach Anspruch 6, wobei die Informationen Informationen bezüglich Anreizen für die Nutzer enthalten.

8. Verfahren (500) nach einem der Ansprüche 1 bis 7, wobei das Anschließen wieder ausgeführt wird, wenn ein Sensor (112, 115) in einem ausgewählten Paar (112/122, 115/125) Messdaten an das Mobilgerät (122, 125) bereitstellt.

9. Verfahren (500) nach einem der Ansprüche 1 bis 8, wobei das Auswählen das Vergleichen von Fähigkeitsdaten unter mehreren registrierten Paaren umfasst.

10. Verfahren (500) nach einem der Ansprüche 1 bis 9, wobei das Anschließen von einem Netzwerk (400) mit Zwischenknoten (441,442) ausgeführt wird, die zwischen den Mobilgeräten (421,422, 423, 424, 425) und dem Computersystem (450) angeschlossen sind.

11. Verfahren (500) nach Anspruch 10, wobei die Zwischenknoten Knoten des Telekommunikationsnetzwerks sind.

12. Computerprogrammprodukt, dass - wenn es in einen Speicher eines Computers geladen und von mindestens einem Prozessor des Computers ausgeführt wird - die Schritte des computerimplementierten Verfahrens nach einem der Ansprüche 1 bis 11 ausführt.

13. Computersystem (150), umfassend: eine Anschlusseinheit an ein Telekommunikationsnetzwerk (141, 142, 143, 145, 147, 149) zum Verbinden einer Vielzahl von Mobilgeräten (121, 122, 123, 125, 127, 129) mit dem Computersystem (150); eine Sendereinheit zum Senden von Teilnahmeanfragen (160) an die Mobilgeräte (121, 122, 123, 125, 127, 129), wobei die Anfragen (160) eine Angabe eines Phänomens (1) enthalten, das unter einer gegebenen Randbedingung (101) in einer Messkampagne gemessen werden soll; eine Registereinheit zum Registrieren von Paaren (111/121, 112/122, 115/125) von Sensoren und Mobilgeräten (121, 122, 125) der Vielzahl von Mobilgeräten (111, 112, 115), wobei die Sensoren zu dem Phänomen passen (1); eine Austauscheinheit, die Fähigkeitsdaten (CAPA) zwischen den registrierten Paaren (111/121, 112/122, 115/125) und dem Computersystem (150) austauscht, wobei sich die Daten (CAPA) auf die Fähigkeit der registrierten Paare (111/121, 112/122, 115, 125) zur Teilnahme an der Messung unter der gegebenen Randbedingung (101) beziehen; und eine Auswahleinheit zum Auswählen registrierter Paare (112/122, 115/125), damit die Fähigkeitsdaten der gegebenen Randbedingung (101) entsprechen; **dadurch gekennzeichnet, dass** die Anschlusseinheit, die Sendereinheit und die Registereinheit angepasst sind, um Schritte mit einem relativ geringen Ressourcenverbrauch für eine relativ hohe Anzahl von Sensoren und Geräten auszuführen, und die Austauscheinheit und die Auswahleinheit angepasst sind, um Schritte mit einer relativ geringen Anzahl von verbleibenden Sensoren und Geräten auszuführen, die Transaktionen unterliegen, die einen relativ hohen Ressourcenverbrauch erfordern.

## Revendications

1. Procédé mis en oeuvre par ordinateur (500) permettant d'identifier un sous-ensemble de capteurs (112, 115) parmi une pluralité de capteurs (111, 112, 113, 114, 115, 116, 117, 118, 119) pour participer à la mesure d'un phénomène particulier (1) sous une contrainte donnée (101), ledit procédé (500) comprenant :
le couplage (510) d'une pluralité de dispositifs mobiles (121, 122, 123, 125, 127, 129) à un système informatique (150) par un réseau de télécommunication (141, 142, 143, 145, 147, 149) ;
l'envoi (520) de demandes de participation (160) aux dispositifs mobiles (121, 122, 123, 125, 127, 129), lesdites demandes (160) comprenant une indication du phénomène (1) à mesurer ;
la connexion (530) des capteurs (111, 112, 115, 117, 119) qui correspondent au phénomène (1) aux dispositifs mobiles (121, 122, 125, 127, 129) afin d'obtenir des paires (111/121, 112/122, 115/125, 117/127, 119/129) de capteurs et des dispositifs mobiles ;
l'enregistrement (540) d'un sous-ensemble des paires (111/121, 112/122, 115/125) avec le système informatique (150) ;
l'échange (550) de données de capacité (CAPA) entre les paires enregistrées (111/121, 112/122, 115/125) et le système informatique (150), lesdites données (CAPA) étant relatives à la capacité des paires enregistrées (111/121, 112/122, 115/125) à participer à la mesure sous la contrainte donnée (101) ; et
la sélection (560) des paires enregistrées (112/122, 115/125) pour que les données de capacité respectent la contrainte donnée (101) ;
ledit procédé étant **caractérisé en ce que** le couplage (510), l'envoi (520), la connexion (530) et l'enregistrement (540) sont effectués avec une consommation de ressources relativement faible pour un nombre relativement élevé de capteurs et de dispositifs et les étapes d'échange (550) et de sélection (560) sont effectuées avec un nombre relativement faible de capteurs et de dispositifs restants qui sont soumis à des opérations qui exigent une consommation de ressources relativement élevée.

2. Procédé (500) selon la revendication 1, ladite contrainte (101) étant l'emplacement des paires enregistrées (112/122, 115/125) dans un emplacement géographique donné (101) durant un intervalle de temps donné.

3. Procédé (500) selon l'une quelconque des revendications 1 à 2, ladite connexion (510) de capteurs (111, 112, 115, 117, 119) étant effectuée pour des capteurs sans fils ou mobiles.

4. Procédé (500) selon la revendication 1 ou 2, au moins certains des dispositifs mobiles (221, 222, 223, 225, 227) étant associés à des utilisateurs humains (231, 232, 233, 235, 237) qui interagissent avec les utilisateurs avant l'enregistrement (540) afin que la participation soit acceptée (231, 232) ou refusée (235).

5. Procédé (500) selon la revendication 4, lesdites contraintes liées à l'utilisateur sont échangées à travers l'échange (550) de données de capacité afin que la combinaison de capteur (312), de dispositif mobile (322) et d'utilisateur (332) soit sélectionnée durant l'étape de sélection (560).

6. Procédé (500) selon l'une quelconque des revendications 4 à 5, ledit envoi (520) des demandes de participation comprenant des informations concernant des activités de suivi par l'ordinateur central à la suite de la réalisation d'une campagne de mesure.

7. Procédé (500) selon la revendication 6, lesdites informations comprenant des informations concernant des incitations pour les utilisateurs.

8. Procédé (500) selon l'une quelconque des revendications 1 à 7, ladite connexion étant effectuée à nouveau lorsqu'un capteur (112, 115) dans une paire sélectionnée (112/122, 115/125) fournit des données de mesure au dispositif mobile (122, 125).

9. Procédé (500) selon l'une quelconque des revendications 1 à 8, ladite sélection comprenant la comparaison des données de capacité entre plusieurs paires enregistrées.

10. Procédé (500) selon l'une quelconque des revendications 1 à 9, ladite connexion étant effectuée par un réseau (400) avec des noeuds intermédiaires (441, 442) qui sont connectés entre les dispositifs mobiles (421, 422, 423, 424, 425) et le système informatique (450).

11. Procédé (500) selon la revendication 10, lesdits noeuds intermédiaires étant des noeuds du réseau de télécommunications.

12. Produit programme informatique qui, lorsque il est chargé dans une mémoire d'un ordinateur et exécuté par au moins un processeur de l'ordinateur, effectue les étapes du procédé mis en oeuvre par ordinateur selon l'une quelconque des revendications 1 à 11.

13. Système informatique (150) comprenant : une unité de connexion à un réseau de télécommunication (141, 142, 143, 145, 147, 149) afin de coupler une pluralité de dispositifs mobiles (121, 122, 123, 125, 127, 129) au système informatique (150) ; une unité d'envoi pour envoyer des demandes de participation (160) aux dispositifs mobiles (121, 122, 123, 125, 127, 129), lesdites demandes (160) comprenant une indication d'un phénomène (1) à mesurer sous une contrainte donnée (101) dans une campagne de mesure ; une unité d'enregistrement pour enregistrer des paires (111/121, 112/122, 115/125) de capteurs et de dispositifs mobiles (121, 122, 125) de la pluralité de dispositifs mobiles (111, 112, 115), lesdits capteurs correspondant au phénomène (1) ; une unité d'échange échangeant des données de capacité (CAPA) entre les paires enregistrées (111/121, 112/122, 115/125) et le système informatique (150), les données (CAPA) relatives à la capacité des paires enregistrées (111/121, 112/122, 115, 125) à participer à la mesure sous la contrainte donnée (101) ; et une unité de sélection pour sélectionner des paires enregistrées (112/122, 115/125) pour que les données de capacité respectent la contrainte donnée (101) ; **caractérisé en ce que** l'unité de connexion, l'unité d'envoi et l'unité d'enregistrement sont conçues pour effectuer les étapes avec une consommation de ressources relativement faible pour un nombre relativement élevé de capteurs et de dispositifs et l'unité d'échange et l'unité de sélection sont conçues pour effectuer les étapes avec un nombre relativement faible de capteurs et de dispositifs restants qui sont soumis à des opérations qui exigent une consommation de ressources relativement élevée.
